(19)

Europäisches
Patentamt
European
Patent Office
Office européen
des brevets

(11) **EP 4 206 727 A1**

(12) **EUROPEAN PATENT APPLICATION**

(43) Date of publication:
**05.07.2023 Bulletin 2023/27**

(21) Application number: **22183375.9**

(22) Date of filing: **06.07.2022**

(51) International Patent Classification (IPC):
**G01S 7/484** (2006.01)    **G01S 7/4861** (2020.01)
**G01S 7/486** (2020.01)    **G01S 7/4912** (2020.01)
**G01S 7/4863** (2020.01)    **G01S 17/89** (2020.01)
**G01S 17/93** (2020.01)

(52) Cooperative Patent Classification (CPC):
**G01S 7/484; G01S 7/4861; G01S 7/4868;
G01S 7/4918;** G01S 7/4863; G01S 17/89;
G01S 17/93

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.12.2021 KR 20210193240**

(71) Applicant: **Samsung Electronics Co., Ltd.
Gyeonggi-do, 16677 (KR)**

(72) Inventors:
• **OTSUKA, Tatsuhiro
16678, Suwon-si, (KR)**
• **SON, Kyunghyun
16678, Suwon-si, (KR)**

(74) Representative: **Elkington and Fife LLP
Prospect House
8 Pembroke Road
Sevenoaks, Kent TN13 1XR (GB)**

(54) **LIDAR DEVICE AND OPERATING METHOD THEREOF**

(57) A light detection and ranging (LiDAR) device and an operating method thereof include irradiating a laser light toward an object; outputting a laser reflection light signal by detecting the laser light reflected from the object; measuring a pulse width corresponding to a period in which the laser reflection light signal is saturated from the laser reflection light signal and changing at least one of a laser light intensity to be irradiated by the laser light irradiator or a gain of an amplifier according to the analyzed pulse width; and controlling the laser light irradiator to irradiate an adjusted laser light corresponding to the changing.

FIG. 1

**Description**

FIELD OF THE INVENTION

The disclosure relates to light detection and ranging (LiDAR) devices and methods of operating the LiDAR devices.

BACKGROUND OF THE INVENTION

Recently, light detection and ranging (LiDAR) systems are used in various fields, such as, aerospace, geology, 3D maps, automobiles, robots, and drones. LiDAR devices use a time of flight (ToF) method for measuring the round-trip time of light to have a function of measuring a distance between a capture device and an object. For example, a LiDAR device may irradiate a laser light toward an object, receive the laser light reflected by the object at a sensor, and measure a ToF by processing information detected by the sensor. Thereafter, the LiDAR device calculates the distance from the flight time to the object, and generates a depth image of the object by using the calculated distance for each area of the object, so that it can be utilized in technical fields for various purposes.

SUMMARY OF THE INVENTION

Provided are light detection and ranging (LiDAR) devices and methods of operating methods the LiDAR devices. The technical problem to be solved by the disclosure is not limited to the technical problems described in the disclosure, and other technical problems may be inferred from the following embodiments.

Additional aspects will be set forth in part in the description which follows and, in part, will be apparent from the description, or may be learned by practice of the presented embodiments of the disclosure.

According to an aspect of the disclosure, there is provided a light detection and ranging (LiDAR) device including: a laser light irradiator configured to irradiate a laser light toward an object; a laser light receiver configured to output a laser reflection light signal by detecting the laser light reflected from the object; a signal analyzer configured to measure a pulse width corresponding to a period in which the laser reflection light signal is saturated; and a processor configured to: change at least one of a laser light intensity at which the laser light is irradiated by the laser light irradiator or a gain of an amplifier based on the pulse width, and control at least one of the laser light irradiator to irradiate an adjusted laser light based on the changed laser light intensity or the amplifier to amplify the laser reflection light signal with the changed gain.

The signal analyzer may include: a comparator configured to compare the laser reflection light signal with a reference level, and a time-to-digital converter (TDC) configured to measure the pulse width by counting a time of a period in which the laser reflection light signal exceeds the reference level based on a comparison result from the comparator.

The laser light irradiator may be further configured to irradiate the adjusted laser light based on the changed laser light intensity toward the object, and the laser light receiver is further configured to output an adjusted laser reflection light signal by detecting the laser light reflected from the object by the adjusted laser light, wherein the processor may be further configured to calculate a distance to the object, based on a time of flight (ToF) from the LiDAR device to the object measured, by using the adjusted laser reflection light signal.

The TDC may be further configured to measure the ToF by counting a time between irradiation of the adjusted laser light with the changed laser light intensity and detection of the reflected laser light.

The processor may be further configured to perform the change such that the laser light irradiator irradiates the adjusted laser light with the changed laser light intensity corresponding to the measured pulse width, based on a lookup table in which laser light intensities corresponding to respective pulse widths are mapped.

The processor may be further configured to perform the change such that the amplifier amplifies a signal by the changed gain corresponding to the measured pulse width, based on a lookup table in which gains of the amplifier corresponding to respective pulse widths are mapped.

The laser light irradiator may include a plurality of laser light sources, wherein a first laser light source among the plurality of laser light sources is configured to irradiate the laser light, and wherein the plurality of laser light sources are each configured to irradiate the adjusted laser light with the changed laser light intensity toward the object based on the change by the processor.

Irradiation of the laser light and irradiation of the adjusted laser light with the changed laser light intensity may be performed in units of 1 pixel of an image of the object.

The processor may be further configured to decrease the laser light intensity as the measured pulse width increases, and increase the laser light intensity as the measured pulse width decreases.

The processor may be further configured to change the laser light intensity according to an equation as follows:

LD Power = 0.0002 * Width2 - 0.025 * Width + 1.2179, wherein, LD Power is the laser light intensity, and Width denotes the measured pulse width.

According to another aspect of the disclosure, there is provided an operating method of a light detection and ranging (LiDAR) device, the method including: irradiating, by a laser light irradiator, a laser light toward an object; outputting, by a laser light receiver, a laser reflection light signal by detecting the laser light reflected from the object; measuring a pulse width corresponding to a period in which the laser reflection light signal is saturated from the laser reflection light signal; changing at least one of a laser light intensity at which the laser light is irradiated by the laser light irradiator or a gain of an amplifier based on the pulse width; and controlling at least one of the laser light irradiator to irradiate an adjusted laser light based on the changed laser light intensity or the amplifier to amplify the laser reflection light signal with the changed gain.

The measuring may include measuring, by using a time-to-digital converter (TDC), the pulse width by counting a time of a period in which the laser reflection light signal exceeds a reference level.

The operating method may further include calculating a distance of the object, based on a time of flight (ToF) from the LiDAR device to the object measured using the laser reflection light signal.

The ToF may be measured by counting a time between irradiation of the adjusted laser light with the changed laser light intensity and detection of the reflected laser light by using the TDC.

The changing may include performing the changing such that the laser light irradiator irradiates the adjusted laser light with the changed laser light intensity corresponding to the measured pulse width, based on a lookup table in which laser light intensities corresponding to respective pulse widths are mapped.

The changing may further include performing the changing such that the amplifier amplifies a signal by the changed gain corresponding to the measured pulse width, based on a lookup table in which gains of the amplifier corresponding to respective pulse widths are previously mapped.

The operating method may further include irradiating the laser light using a first laser light source among a plurality of laser light sources provided in the laser light irradiator; and irradiating the adjusted laser light with the changed laser light intensity toward the object using the plurality of laser light sources.

The irradiating of the laser light and the irradiating of the adjusted laser light with the changed laser light intensity may be performed in units of 1 pixel of an image of the object.

The changing may include decrease the laser light intensity as the measured pulse width increases, and increase the laser light intensity as the measured pulse width decreases.

The changing may include changing the laser light intensity according to an equation as follows: LD Power = 0.0002 * Width2 - 0.025 * Width + 1.2179, wherein, LD Power is the laser light intensity, and Width is the measured pulse width.

According to another aspect of the disclosure, there is provided an apparatus including: a memory storing one or more instructions; and a processor configured to execute the one or more instructions to: output a signal to a laser light irradiator to emit a laser light; determine whether a laser reflection light signal is saturated, the laser reflection light signal corresponding to the laser light reflected by an object; change at least one of a laser light intensity at which the laser light is emitted by the laser light irradiator or a gain of an amplifier which receives the laser reflection light signal; and control at least one of the laser light irradiator to irradiate the laser light based on the changed laser light intensity or the amplifier to amplify the laser reflection light signal with the changed gain.

The processor may be further configured to: receive, from a laser light receiver, the laser reflection light signal; and obtain a pulse width corresponding to a period in which the laser reflection light signal is saturated.

The processor may be further configured to: change the at least one of a laser light intensity or the gain of the amplifier based on the pulse width.

BRIEF DESCRIPTION OF THE DRAWINGS

The above and other aspects, features, and advantages of certain embodiments of the disclosure will be more apparent from the following description taken in conjunction with the accompanying drawings, in which:

FIG. 1 is a diagram illustrating a light detection and ranging (LiDAR) device according to an example embodiment;
FIG. 2 is a diagram illustrating saturation of laser reflection light signals;
FIGS. 3A and 3B are diagrams diagram illustrating a comparison between an unsaturated signal and a saturated signal according to an example embodiment;
FIG. 4 is a diagram illustrating an operation of a signal analyzer of a LiDAR device according to an example embodiment;
FIGS. 5A is a diagram illustrating saturated laser reflection light signals and 5B is a diagram illustrating a pulse width of a saturation period in a laser reflection light signal according to an example embodiment;
FIG. 6A, 6B and 6C are diagrams illustrating a method of adjusting a laser light intensity based on a pulse width measured from a saturation signal according to example embodiments;

FIG. 7 is a diagram illustrating a relationship between a pulse width measured from a saturation signal and a laser light intensity to be changed according to an example embodiment;

FIG. 8 is a diagram illustrating a method of measuring a distance using a plurality of laser light sources provided in a laser light irradiator according to an example embodiment; and

FIG. 9 is a diagram illustrating an operating method of a LiDAR device according to an example embodiment.

DETAILED DESCRIPTION

Reference will now be made in detail to embodiments, examples of which are illustrated in the accompanying drawings, wherein like reference numerals refer to like elements throughout. In this regard, the example embodiments may have different forms and should not be construed as being limited to the descriptions set forth herein. Accordingly, the example embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

The terms used in the disclosure are selected based on general terms currently widely used in the art in consideration of functions regarding the disclosure, but the terms may vary according to the intention of those of ordinary skill in the art, precedents, or new technology in the art. Also, some terms may be arbitrarily selected, and in this case, the meaning of the selected terms will be described in the detailed description of the disclosure. Thus, the terms used herein should not be construed based on only the names of the terms but should be construed based on the meaning of the terms together with the description throughout the disclosure.

In the descriptions of the example embodiments, when a part is connected to another part, this includes not only a case in which the part is directly connected to the other part, but also a case in which the part is electrically connected to the other part with another element interposed therebetween. The terms of a singular form may include plural forms unless otherwise mentioned. Also, when a part "includes" an element, it means that other elements may be further included, rather than excluding other elements, unless otherwise stated.

In the following descriptions of the example embodiments, expressions or terms such as "constituted by," "formed by," "include," "comprise," "including," and "comprising" should not be construed as always including all specified elements, processes, or operations, but may be construed as not including some of the specified elements, processes, or operations, or further including other elements, processes, or operations.

In addition, although terms such as "first" and "second" are used to describe various elements, these elements should not be limited by these terms. These terms are only used to distinguish one element from other elements.

The following descriptions of the example embodiments should not be construed as limiting the scope of the disclosure, and modifications or changes that could be easily made from the example embodiments by those of ordinary skill in the art should be construed as being included in the scope of the disclosure. Hereinafter, embodiments will be described with reference to the accompanying drawings.

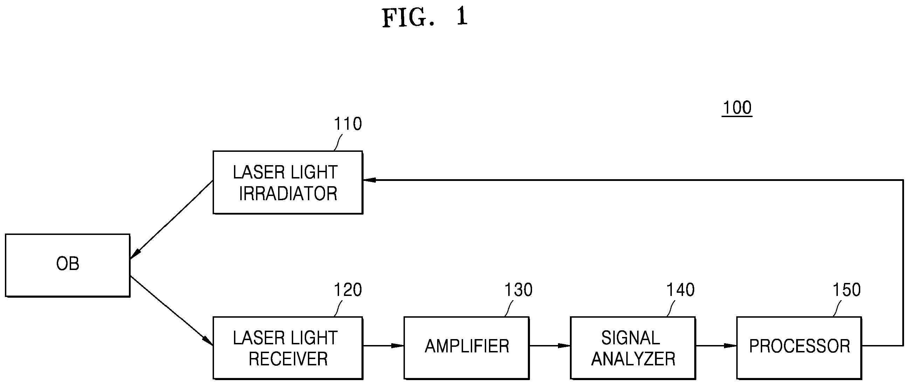

FIG. 1 is a diagram illustrating a light detection and ranging (LiDAR) device according to an example embodiment.

The LiDAR device 100 may be used as a sensor for obtaining three-dimensional (3D) information such as distance information about an object located in front of the LiDAR device 100 in real time. For example, the LiDAR device 100 may be applied to an unmanned vehicle, an autonomous vehicle, a robot, a drone, etc. For example, the LiDAR device 100 may be a device using LiDAR.

The LiDAR device 100 may include a laser light irradiator 110, a laser light receiver 120, an amplifier 130, a signal analyzer 140, and a processor 150. The LiDAR device 100 shown in FIG. 1 includes elements related to the example embodiment, but is not limited thereto, and it may be understood by those of ordinary skill in the art related to the example embodiment that the LiDAR device 100 may further include general-purpose elements other than those shown in FIG. 1.

The laser light irradiator 110 may irradiate a laser light toward an object OB to analyze a location, a shape, and a distance of the object OB. The laser light irradiator 110 may generate and irradiate a pulse light or a continuous light. In addition, the laser light irradiator 110 may generate and irradiate light of a plurality of different wavelength bands.

For example, the laser light irradiator 110 may emit light in an infrared region. When the light in the infrared region is used, mixing with a natural light in a visible region including sunlight may be prevented. However, the laser light irradiator 110 is not necessarily limited to the infrared region and may emit light of various wavelength regions. In this case, correction may be required to remove information of the mixed natural light.

The laser light irradiator 110 may irradiate light using a laser light source, but is not limited thereto. The laser light irradiator 110 may use a light source such as an edge emitting laser, a vertical-cavity surface emitting laser (VCSEL), a distributed feedback laser, a super luminescent diode (SLD), etc. For example, the laser light irradiator 110 may include a laser diode (LD). According to an example embodiment, the laser light irradiator 110 may be included in another device, and is not necessarily configured as hardware included in the LiDAR device 100.

The laser light irradiator 110 may set a light irradiation direction or an irradiation angle under the control of the processor 150. According to another example embodiment, the laser light irradiator 110 may further include a beam steering element changing an irradiation angle of light. Here, the beam steering element may be implemented as a scanning mirror, an optical phased array, etc.

The laser light receiver 120 may detect the laser light reflected or scattered from the object OB and output an electrical signal. For example, the laser light receiver 120 may convert light reflected or scattered from the object OB into a voltage signal.

The laser light receiver 120 is a sensor capable of sensing a reflected laser light, and may be, for example, a light receiving element that generates an electrical signal by light energy. A type of the light receiving element is not limited to the example embodiment of the disclosure. For example, according to an example embodiment, the laser light receiver 120 may employ an avalanche photo diode (APD) or a single photon avalanche diode (SPAD). That is, the laser light receiver 120 outputs a laser reflection light signal by detecting the laser light reflected from the object OB using the light receiving element such as an APD or a SPAD. However, the disclosure is not limited thereto, and as such, other types of light receiving element may be implemented in the laser light receiver 120.

The amplifier 130 may include a transimpedance amplifier (TIA). In addition, the amplifier 130 may also include a variable gain amplifier (VGA) that amplifies an electric signal by a variable gain according to a level of the amplified electric signal provided from the TIA. That is, the amplifier 130 amplifies the laser reflection light signal output from the laser light receiver 120.

The signal analyzer 140 may analyze a time-of-flight (ToF) of the laser light with respect to the object OB by performing signal processing on the laser reflection light signal obtained from the amplifier 130.

The signal analyzer 140 may include a peak detector, a comparator, and a time-to-digital converter (TDC).

The peak detector may detect a peak in the laser reflection light signal amplified by the amplifier 130. According to an example embodiment, the peak detector may detect the peak by detecting a central position of the electrical signal. According to another example embodiment, the peak detector may detect the peak by detecting a width of the electrical signal in an analog manner. According to another example embodiment, the peak detector may detect the peak by converting the electrical signal into a digital signal and then detecting a rising edge and a falling edge of the digital signal. According to another example embodiment, the peak detector 140 may detect the peak by using a constant fraction discriminator (CFD) method of dividing a signal into a plurality of signals, inverting and time delaying some signals, combining some signals with the remaining signals, and detecting a zero cross point. The comparator may output the detected peak as a pulse signal, and the TDC may count a time from when the laser light is irradiated to when the pulse signal indicating the peak is output and output a digital value with respect to the ToF.

The processor 150 may control overall operations of various hardware elements and/or software elements included in the LiDAR device 100.

The processor 150 may calculate a distance to the position of the object OB based on the ToF measured by the signal analyzer 140, and perform data processing for analyzing the position and the shape of the object OB. For example, the processor 150 may generate a depth image of the object OB based on the calculated distance.

According to an example embodiment, information about the shape and the position of the object OB analyzed by the processor 150 may be transmitted to and utilized by another unit. For example, information about the shape and the position of the object OB may be transmitted to an autonomous driving device such as an autonomous driving vehicle or a drone in which the LiDAR device 100 is employed, and may be transmitted to a computing device such as a smart phone, a tablet, a laptop, a personal computer (PC), a wearable device, etc.

Meanwhile, when the object OB is in a close distance or a reflectance of the object OB is relatively large, a level of the laser reflection light signal output from the laser light receiver 120 may be high. In this case, when the laser reflection light signal of a high level is amplified with the same gain as before, a dynamic range of the electrical signal may exceed, and thus the electrical signal may be saturated. To this end, the signal analyzer 140 may perform an analysis of measuring a pulse width corresponding to a period in which the laser reflection light signal is saturated from the laser reflection light signal, and the processor 150 may control the laser light irradiator 110 or the amplifier 130 to change at least one of a laser light intensity to be irradiated by the laser light irradiator 110 or a gain of the amplifier 130 according to the analyzed pulse width and irradiate an adjusted laser light.

The LiDAR device 100 may further include a memory in which programs (e.g., instructions and program code) and other data for operations performed by the processor 150 are stored. The memory is hardware storing various types of data processed in the LiDAR device 100, and for example, the memory may store data processed and data to be processed by the LiDAR device 100. In addition, the memory may store applications, drivers, etc. to be driven by the LiDAR device 100. The memory may include random access memory (RAM), such as dynamic random access memory (DRAM), static random access memory (SRAM), read-only memory (ROM), electrically erasable programmable read-only memory (EEPROM), CD-ROM, blue Ray or other optical disk storage, hard disk drive (HDD), solid state drive (SSD), or flash memory, and may further include other external storage devices that may be accessed by the LiDAR device 100.

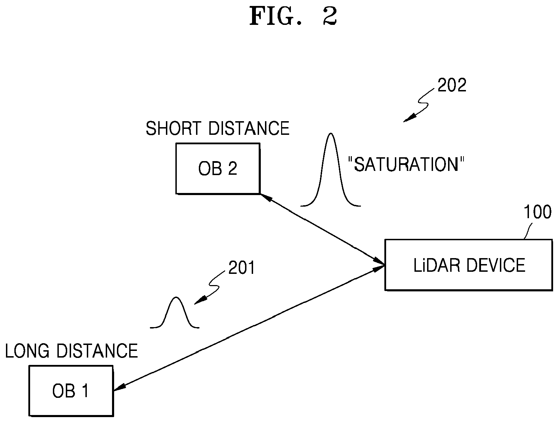

FIG. 2 is a diagram illustrating saturation of laser reflection light signals 201 and 202.

Referring to FIG. 2, the LiDAR device 100 may measure a distance with respect to an object OB1 located at a long distance and may measure a distance with respect to an object OB2 located at a short distance using a laser light.

Specifically, the LiDAR device 100 may calculate the distance based on a ToF taken to irradiate the laser light to the object OB1 located at a long distance and detect the laser reflection light signal 201 from the object OB1. Similarly, the LiDAR device 100 may calculate the distance based on a ToF taken to irradiate the laser light to the object OB2 located at a short distance and detect the laser reflection light signal 202 from the object OB2.

In this case, an intensity of the laser reflection light signal 202 reflected from the object OB2 is greater than an intensity of the laser reflection light signal 201 reflected from the object OB1. This is because, when the intensity of the laser light irradiated from the LiDAR device 100 is the same, the shorter the flight path of the laser light, the smaller the loss. Accordingly, when the LIDAR device 100 irradiates a laser light of the same intensity to the object OB1 located at a long distance and the object OB2 located at a short distance to measure the distance, a signal 202 reflected from the object OB2 located at a short distance exceeds a dynamic range detectable by the LiDAR device 100 and is detected as a saturated signal, and thus an accurate distance of the object OB2 may not be measured.

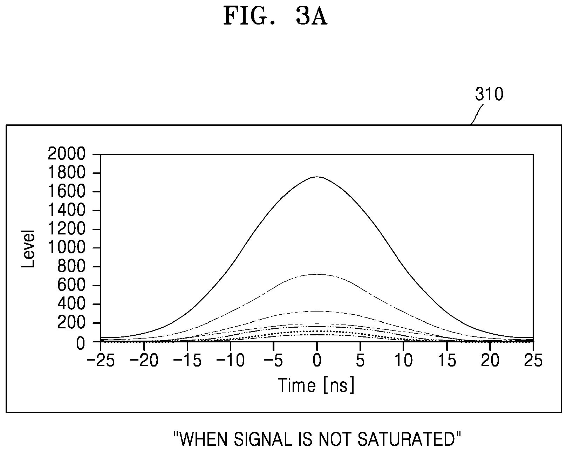

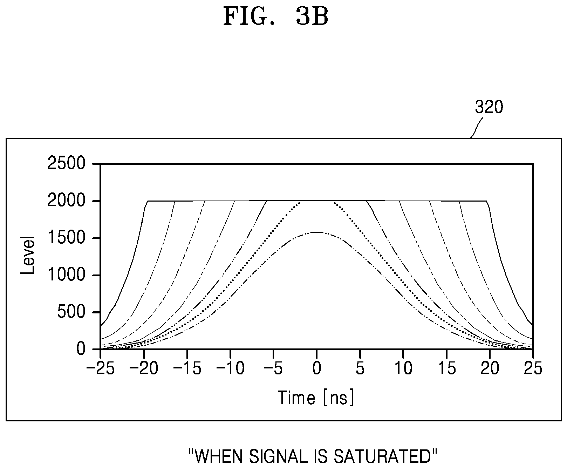

FIGS. 3A and 3B are diagrams illustrating a comparison between an unsaturated signal and a saturated signal according to an example embodiment.

Referring to FIGS. 3A and 3B, laser reflection light signals obtained from objects located at various distances are shown in graphs 310 and 320.

In the LiDAR device 100, a dynamic range of a detectable envelope signal may be determined or changed according to specifications and settings of the laser light receiver 120. In FIG. 3A, the graph 310 illustrates a case in which signals are not saturated as laser reflection light signals obtained from objects at a long distance. Meanwhile, in FIG. 3B, the graph 320 illustrates a case in which signals are saturated as laser reflection light signals obtained from objects at a short distance.

Referring to the graph 320 in FIG. 3B, with respect to signals exceeding level 2000, an amplitude of the entire signal is measured, and thus a peak of the corresponding signal may not be detected. That is, the LiDAR device 100 may not detect the peak of the laser reflection light signal, and not accurately measure a distance to the object at a short distance. Thus, an error may occur in the distance measurement or a signal-to-noise ratio (SNR) of the distance measurement may increase. Accordingly, in order to accurately measure the distance to the object at a short distance, it is necessary to adjust the intensity of the laser reflection light signal or the amplification gain based on signal levels suitable for the dynamic range of the laser light receiver 120.

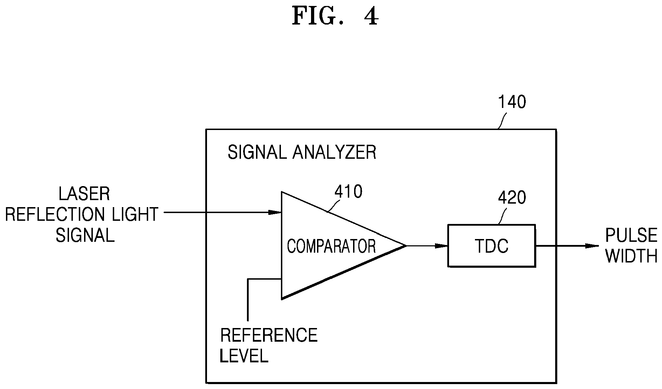

FIG. 4 is a diagram illustrating an operation of a signal analyzer 140 of a LiDAR device according to an example embodiment.

Referring to FIG. 4, the signal analyzer 140 may include a comparator 410 and a time-to-digital converter TDC 420. Although elements related to the description of the example embodiment are illustrated in the signal analyzer 140 shown in FIG. 4, the signal analyzer 140 may further include other elements including general-purpose elements.

The comparator 410 may obtain a laser reflection light signal and compare the laser reflection light signal with a reference level. The reference level may be a preset reference level. The laser reflection light signal input to the comparator 410 may be a signal amplified by the amplifier 130.

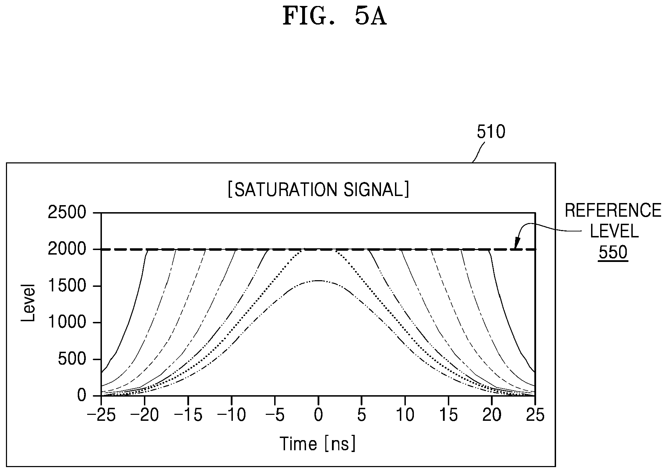

The reference level may be a reference level 550 corresponding to the level 2000 which will be described in FIG. 5A, and a reference voltage corresponding to the reference level may be input to the comparator 410 as a comparison voltage. Specifically, the comparator 410 may use the reference level to detect a period in which an electrical signal is saturated. The period in which the electrical signal is saturated may mean a pulse width corresponding to a time period from a start point to an end point of signal saturation in the laser reflection light signal. However, the reference level to be input to the comparator 410 may not necessarily coincide with a threshold level at which the signal is saturated, and may be set lower than the threshold level of saturation.

The comparator 410 may output a certain signal value in a period in which the laser reflection light signal exceeds the reference level, by comparing the reference level and the laser reflection light signal. For example, the certain signal value may correspond to a pulse signal indicating high (e.g., a high level) or a digital signal indicating a certain logic value (e.g., a logic value '1'), but is not limited thereto. That is, as long as the comparator 410 provides an output indicating the period exceeding the reference level in the laser reflection light signal according to a comparison result, any type of output may be applied to the example embodiment.

The TDC 420 may count the time during which the signal value is maintained in the period in which the laser reflection light signal output from the comparator 410 exceeds the reference level to measure the pulse width corresponding to the period in which the laser reflection light signal is saturated. For example, the TDC 420 may output a digital value corresponding to the measured pulse width.

That is, the signal analyzer 140 may analyze the pulse width corresponding to the period in which the laser reflection light signal is saturated from the laser reflection light signal, and output a value corresponding to the analyzed pulse width.

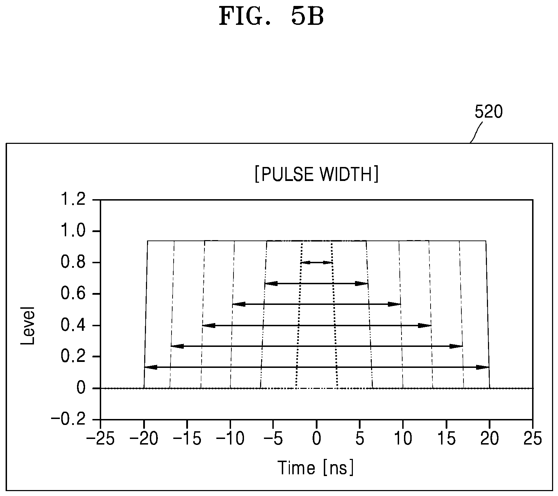

FIGS. 5A and 5B are diagrams illustrating a pulse width of a saturation period in a laser reflection light signal according to an example embodiment.

Referring to FIG. 5A, a graph 510 represents saturated laser reflection light signals. A reference level 550 for detecting the saturation period may be set to level 2000, and the comparator 410 may use a reference voltage corresponding to the level 2000.

Referring to FIG. 5B, a graph 520 represents the pulse width of the saturation period. A pulse width corresponding to a period (the saturation period) exceeding the reference level 550 in each envelope signal of the graph 510 may be measured by the comparator 410 and the TDC 420, and a time corresponding to the measured pulse width may be output. The longer the pulse width, the longer the saturation period, and the shorter the pulse width, the shorter the saturation period.

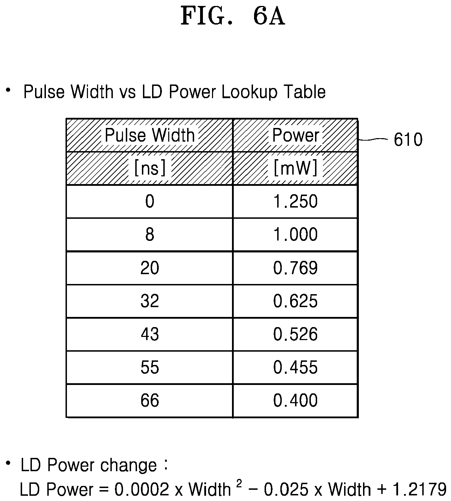

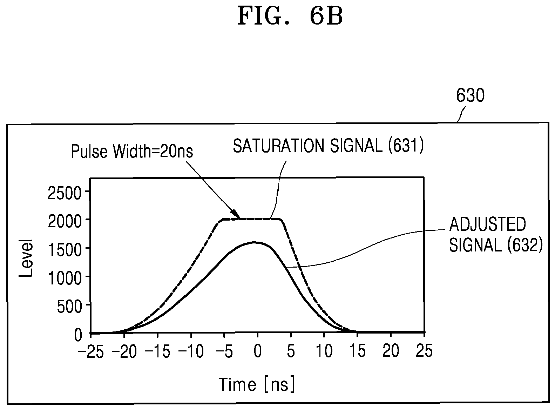

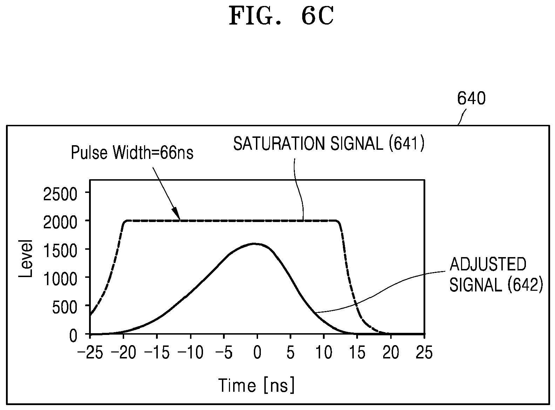

FIGS. 6A, 6B and 6C are diagrams illustrating adjusting a laser light intensity based on a pulse width measured from a saturation signal according to example embodiments.

The processor 150 may change at least one of the laser light intensity to be irradiated by the laser light irradiator 110 or a gain of the amplifier 130 according to the pulse width analyzed by the signal analyzer 140. In addition, the processor 150 may control the laser light irradiator 110 to irradiate an adjusted laser light corresponding to a change. In FIGS. 6A, 6B and 6C, example embodiments in which the laser light intensity is changed according to the pulse width will be described.

Referring to FIG. 6A, a lookup table 610 may map laser light intensities LD Power corresponding to respective pulse widths. According to an example embodiment, the map laser light intensities LD Power corresponding to respective pulse widths may be previously mapped. According to an example embodiment, based on the lookup table 610, the processor 150 may change the laser light intensities so that the laser light irradiator 110 irradiates the adjusted laser light at the laser light intensity corresponding to the pulse width.

Referring to the lookup table 610, laser light intensity ([mW]) is mapped for every time ([ns]) corresponding to the pulse width. The processor 150 may determine the laser light intensity corresponding to the pulse width analyzed by the signal analyzer 140 using the lookup table 610, and adjust the performance of the laser light irradiator 110 at the determined laser light intensity. When the pulse width and laser light intensity defined in the lookup table 610 are not present, the processor 150 may change the laser light intensity by obtaining an interpolated value using values of the lookup table 610.

Meanwhile, in addition to a method using the lookup table 610, the processor 150 may determine the laser light intensity corresponding to a pulse width analyzed by using Equation 1 below.

[Equation 1]

$$LD \quad Power = 0.0002 \times Width^2 - 0.025 \times Width + 1.2179$$

Here, LD Power denotes the laser light intensity, and Width denotes the measured pulse width.

That is, the processor 150 may determine the laser light intensity corresponding to the saturated pulse width using the lookup table 610 or Equation 1. However, constants of Equation 1 are merely examples, and may be changed to various values suitable for specifications and performance of the LiDAR device 100.

Referring to FIGS. 6B and 6C illustrate examples in which a change in the laser light intensity is applied to a saturation signal.

In FIG. 6B, a graph 630 illustrates an adjusted signal 632 based on a change to the laser light intensity. For example, in the graph 630, as a result of analysis of the saturation signal (e.g., the laser reflection light signal) 631, it is shown that the pulse width is measured to be 20 ns. The processor 150 may determine that the laser light intensity to be changed is 0.769 mV using the lookup table 610, and control the laser light irradiator 110 to irradiate the adjusted laser light at the corresponding laser light intensity (0.769 mV). An adjusted signal (e.g.., the adjusted laser reflection light signal) 632 obtained by reflecting the adjusted laser light signal from the object may not be saturated, and accordingly, an accurate distance measurement of the object may be possible.

In FIG. 6C, a graph 640 illustrates an adjusted signal 642 based on a change to the laser light intensity. For example, referring to the graph 640, because the pulse width analyzed from the saturation signal (e.g., the laser reflection light signal) 641 is 66 ns, it is determined that the laser light intensity to be changed is 0.400 mV. An adjusted signal (e.g., the adjusted laser reflection light signal) 642 obtained by reflecting the adjusted laser light signal from the object may not be also saturated, and accordingly, an accurate distance measurement of the object may be possible.

Meanwhile, according to an example embodiment, in the graphs of FIGS. 3A, 3B, 5A, 5B, 6A and 6B, a level as the y-axis is a relative value corresponding to the laser reflection light signal. However, the disclosure is not limited thereto.

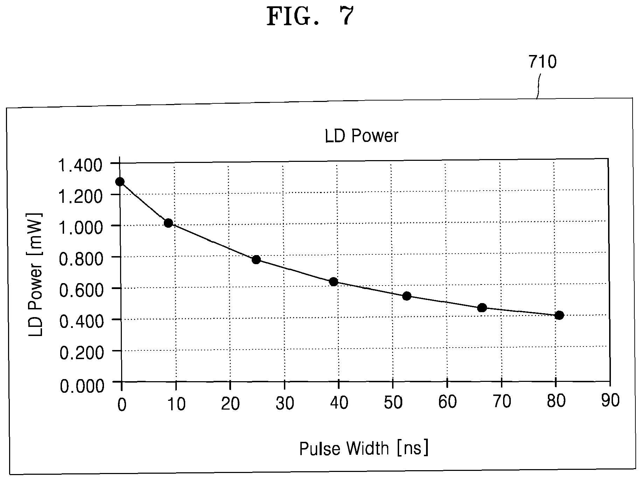

FIG. 7 is a diagram illustrating a relationship between a pulse width measured from a saturation signal and a laser light intensity to be changed according to an example embodiment.

Referring to FIG. 7, a graph 710 illustrates that the relationship between the measured pulse width and the laser light intensity to be changed may be inversely proportional. That is, the longer the measured pulse width, the lower the laser light intensity, and the shorter the measured pulse width, the higher the laser light intensity. As such, because a relatively long pulse width indicates a relatively long saturation period, it is necessary to further decrease the laser light intensity to prevent a saturation period from occurring. Conversely, a relatively short pulse width indicates a relatively short saturation period, which means that it is necessary to further increase the laser light intensity.

Accordingly, the processor 150 may change the laser light intensity to decrease as the measured pulse width increases, and changes the laser light intensity to increase as the measured pulse width decreases.

A function relationship between the pulse width and the laser light intensity in the graph 710 is only an example, and may be changed to various function relationships to suit specifications and performance of the LiDAR device 100.

Meanwhile, the processor 150 may perform an adjustment to change a gain of the amplifier 130 according to the measured (analyzed) pulse width.

A variable gain amplifier (VGA) provided in the amplifier 130 may amplify an electric signal by a gain that varies according to a level of the electric signal. Specifically, the processor 150 may change the gain so that the VGA amplifies a signal (e.g., a laser reflection light signal) with the gain corresponding to the measured pulse width, based on a lookup table in which gains of the VGA corresponding to respective pulse widths are previously mapped.

That is, the processor 150 may control the gain so as to correspond to a saturation level of a detected laser reflection light signal. The gain of the VGA may be controlled so that a pulse width indicating a saturation period of a laser reflection light signal and a gain have an inversely proportional relationship with each other.

For example, the processor 150 may control the VGA to decrease the gain when the pulse width increases. Conversely, when the pulse width decreases, the processor 150 may control the VGA to increase the gain. The VGA may then amplify the laser reflection light signal by the controlled gain. Accordingly, the LiDAR device 100 may amplify the laser reflection light signal by the gain that varies according to the saturation level of the laser reflection light signal, thereby preventing saturation of the laser reflection light signal, and measuring a more accurate distance to an object.

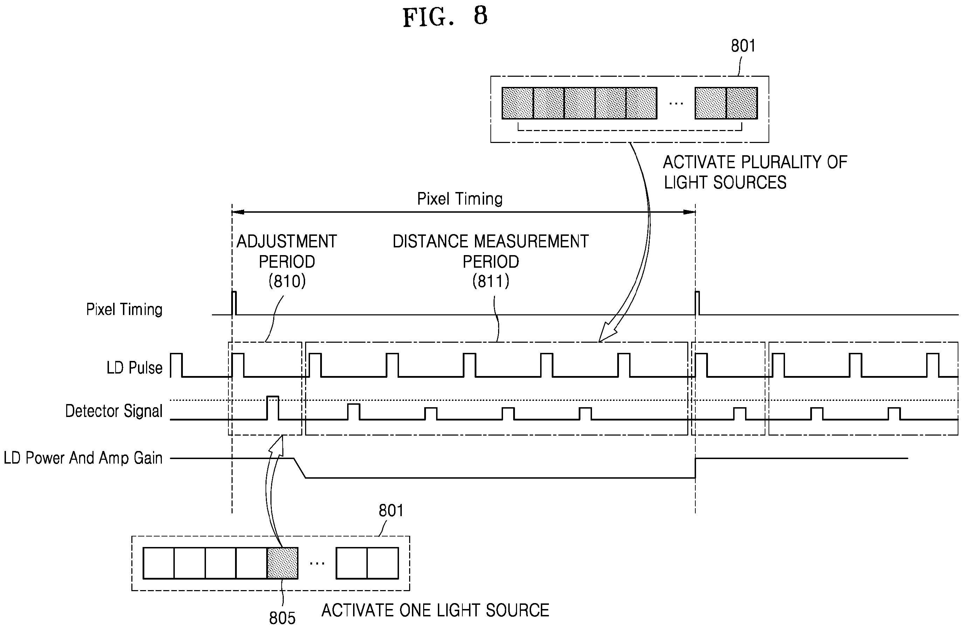

FIG. 8 is a diagram illustrating a method of measuring a distance using a plurality of laser light sources 801 provided in the laser light irradiator 110 according to an example embodiment.

The laser light irradiator 110 may include the plurality of laser light sources 801. For example, the LiDAR device 100 may use the plurality of laser light sources 801 to detect a unit of one pixel of an image of an object. That is, irradiation of a laser light in an adjustment period 810 and irradiation of an adjusted laser light in a distance measurement period 811 may be performed in units of one pixel of the image of the object, but is not limited thereto.

Before measuring a distance to the object, the LiDAR device 100 may adjust a laser light intensity or a gain of an amplifier so that a signal is not saturated. Subsequently, the LiDAR device 100 may measure the distance by performing irradiation and detection of the laser light again based on the adjusted laser light intensity or gain of the amplifier.

First, in the adjustment period 810, the following processes may be performed, and are processes changing at least one of the laser light intensity or the gain of the amplifier according to a pulse width described in the previous drawings.

The laser light irradiator 110 may activate one light source (a first laser light source) 805 among the plurality of laser light sources 801 to radiate the laser light to the object. The signal analyzer 140 may measure a pulse width corresponding to a saturation period from a laser reflection light signal obtained when the laser light irradiated from the first laser light source 805 is reflected from the object. The processor 150 may change at least one of the laser light intensity to be irradiated by the laser light irradiator 110 and the gain of the amplifier according to the measured pulse width, and control the laser light irradiator 110 to irradiate the adjusted laser light corresponding to a change.

That is, in the adjustment period 810, only processes of preventing the saturation signal from being generated are performed, and the distance of the object may not be calculated. However, when it is determined that the saturation signal is not generated, the processor 150 may not change the laser light intensity and the gain of the amplifier. Meanwhile, although it has been described that only one laser light source is activated in the adjustment period 810 in the example embodiment, the disclosure is not limited thereto, and the above processes may be performed by activating two or more laser light sources.

Next, the following processes may be performed in the distance measurement period 811.

When the change in the adjustment period 810 is completed by the processor 150, the laser light irradiator 110 may activate the plurality of laser light sources 801 to radiate the adjusted laser light toward the object. Here, the adjusted laser light refers to a laser light of which laser light intensity is changed in the adjustment period 810.

The laser light receiver 120 may output the adjusted laser reflection light signal by detecting the laser light reflected from the object by the adjusted laser light. The amplifier 130, the signal analyzer 140, and the processor 150 may calculate the distance to the object, based on a ToF from the LiDAR device 100 to the object measured using the adjusted laser reflection light signal. For example, the TDC 420 provided in the signal analyzer 140 may measure the ToF, by counting a time between the irradiation of the adjusted laser light and the detection of the reflected laser light.

In order to prevent an inaccurate distance measurement according to the generation of the saturation signal, the LiDAR device 100 may perform the processes of the adjustment period 810 for adjusting a level of the saturation signal. Accordingly, in the subsequent distance measurement period 811, a more accurate distance measurement may be possible using unsaturated signals.

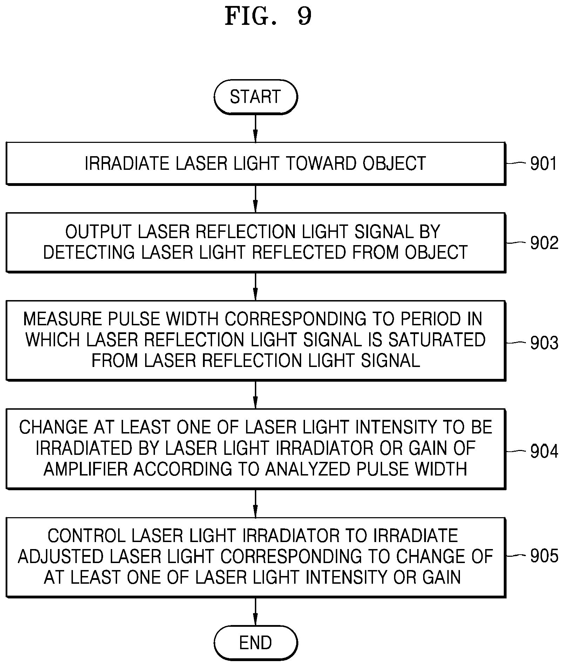

FIG. 9 is a diagram illustrating an operating method of a LiDAR device according to an example embodiment.

Referring to FIG. 9, because the operating method of the LiDAR device 100 is related to the example embodiments in the drawings described above, even if omitted below, the descriptions given with reference to the drawings may also be applied to the method of FIG. 9.

In operation 901, the laser light irradiator 110 may irradiate a laser light toward an object.

In operation 902, the laser light receiver 120 may output a laser reflection light signal by detecting the laser light reflected from the object.

In operation 903, the signal analyzer 140 may measure a pulse width corresponding to a period in which the laser reflection light signal is saturated from the laser reflection light signal.

In operation 904, the processor 150 may change at least one of a laser light intensity to be irradiated by the laser light irradiator 110 or a gain of the amplifier 130 according to the analyzed pulse width.

In operation 905, the processor 150 may control the laser light irradiator 110 to irradiate the adjusted laser light corresponding to a change of at least one of the laser light intensity or the gain.

Meanwhile, the above-described method may be recorded in a computer-readable non-transitory recording medium in which one or more programs including instructions for executing the method are recorded. Examples of the computer-readable recording medium include magnetic media such as hard disks, floppy disks and magnetic tapes, optical media such as CD-ROMs and DVDs, magneto-optical media such as floppy disks, and hardware devices specially configured to store and execute program instructions, such as ROM, RAM, flash memory, etc. Examples of program instructions include not only machine language codes such as those generated by a compiler, but also high-level language codes that may be executed by a computer using an interpreter, etc.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope as defined by the following claims and their equivalents.

**Claims**

1. A light detection and ranging, LiDAR, device comprising:

   a laser light irradiator configured to irradiate a laser light toward an object;
   a laser light receiver configured to output a laser reflection light signal by detecting the laser light reflected from the object;
   a signal analyzer configured to measure a pulse width corresponding to a period in which the laser reflection light signal is saturated; and
   a processor configured to:
   change at least one of a laser light intensity at which the laser light is irradiated by the laser light irradiator or a gain of an amplifier based on the pulse width, and
   control at least one of the laser light irradiator to irradiate an adjusted laser light based on the changed laser light intensity or the amplifier to amplify the laser reflection light signal with the changed gain.

2. The LiDAR device of claim 1, wherein the signal analyzer comprises:

   a comparator configured to compare the laser reflection light signal with a reference level, and
   a time-to-digital converter, TDC, configured to measure the pulse width by counting a time of a period in which the laser reflection light signal exceeds the reference level based on a comparison result from the comparator.

3. The LiDAR device of claim 2, wherein the laser light irradiator is further configured to irradiate the adjusted laser light based on the changed laser light intensity toward the object, and

   the laser light receiver is further configured to output an adjusted laser reflection light signal by detecting the laser light reflected from the object by the adjusted laser light,

wherein the processor is further configured to calculate a distance to the object, based on a time of flight, ToF, from the LiDAR device to the object measured, by using the adjusted laser reflection light signal, and optionally wherein the TDC is further configured to measure the ToF by counting a time between irradiation of the adjusted laser light with the changed laser light intensity and detection of the reflected laser light.

4. The LiDAR device of any preceding claim, wherein the processor is further configured to perform the change such that the laser light irradiator irradiates the adjusted laser light with the changed laser light intensity corresponding to the measured pulse width, based on a lookup table in which laser light intensities corresponding to respective pulse widths are mapped.

5. The LiDAR device of any preceding claim, wherein the processor is further configured to perform the change such that the amplifier amplifies a signal by the changed gain corresponding to the measured pulse width, based on a lookup table in which gains of the amplifier corresponding to respective pulse widths are mapped.

6. The LiDAR device of any preceding claim, wherein the laser light irradiator comprises a plurality of laser light sources,

wherein a first laser light source among the plurality of laser light sources is configured to irradiate the laser light, and
wherein the plurality of laser light sources are each configured to irradiate the adjusted laser light with the changed laser light intensity toward the object based on the change by the processor, and optionally wherein irradiation of the laser light and irradiation of the adjusted laser light with the changed laser light intensity are performed in units of 1 pixel of an image of the object.

7. The LiDAR device of any preceding claim, wherein the processor is further configured to decrease the laser light intensity as the measured pulse width increases, and increase the laser light intensity as the measured pulse width decreases.

8. The LiDAR device of any preceding claim, wherein the processor is further configured to change the laser light intensity according to an equation as follows:

$$\text{LD Power} = 0.0002 * \text{Width}^2 - 0.025 * \text{Width} + 1.2179,$$

wherein, LD Power is the laser light intensity, and Width denotes the measured pulse width.

9. An operating method of a light detection and ranging, LiDAR, device, the method comprising:

irradiating, by a laser light irradiator, a laser light toward an object;
outputting, by a laser light receiver, a laser reflection light signal by detecting the laser light reflected from the object;
measuring a pulse width corresponding to a period in which the laser reflection light signal is saturated from the laser reflection light signal;
changing at least one of a laser light intensity at which the laser light is irradiated by the laser light irradiator or a gain of an amplifier based on the pulse width; and
controlling at least one of the laser light irradiator to irradiate an adjusted laser light based on the changed laser light intensity or the amplifier to amplify the laser reflection light signal with the changed gain.

10. The operating method of claim 9, wherein the measuring comprises measuring, by using a time-to-digital converter, TDC, the pulse width by counting a time of a period in which the laser reflection light signal exceeds a reference level, and optionally further comprising calculating a distance of the object, based on a time of flight, ToF, from the LiDAR device to the object measured using the laser reflection light signal, and further optionally wherein the ToF is measured by counting a time between irradiation of the adjusted laser light with the changed laser light intensity and detection of the reflected laser light by using the TDC.

11. The operating method of claim 9 or 10, wherein the changing comprises performing the changing such that the laser light irradiator irradiates the adjusted laser light with the changed laser light intensity corresponding to the measured pulse width, based on a lookup table in which laser light intensities corresponding to respective pulse widths are mapped.

**12.** The operating method of claim 9, 10 or 11, wherein the changing further comprises performing the changing such that the amplifier amplifies a signal by the changed gain corresponding to the measured pulse width, based on a lookup table in which gains of the amplifier corresponding to respective pulse widths are previously mapped.

**13.** The operating method of any of claims 9 to 12, further comprising:

irradiating the laser light using a first laser light source among a plurality of laser light sources provided in the laser light irradiator; and
irradiating the adjusted laser light with the changed laser light intensity toward the object using the plurality of laser light sources, and optionally wherein the irradiating of the laser light and the irradiating of the adjusted laser light with the changed laser light intensity are performed in units of 1 pixel of an image of the object.

**14.** The operating method of any of claims 9 to 13, wherein the changing comprises decrease the laser light intensity as the measured pulse width increases, and increase the laser light intensity as the measured pulse width decreases.

**15.** A computer program comprising computer program codes means adapted to perform all of the steps of any of claims 9 to 14 when said program is run on a computer.

# FIG. 1

# FIG. 2

SHORT DISTANCE

OB 2

202

"SATURATION"

100

LiDAR DEVICE

201

LONG DISTANCE

OB 1

# FIG. 3A

310

"WHEN SIGNAL IS NOT SATURATED"

# FIG. 3B

"WHEN SIGNAL IS SATURATED"

# FIG. 4

# FIG. 5A

FIG. 5B

# FIG. 6A

- Pulse Width vs LD Power Lookup Table

| Pulse Width [ns] | Power [mW] |
|:---:|:---:|
| 0 | 1.250 |
| 8 | 1.000 |
| 20 | 0.769 |
| 32 | 0.625 |
| 43 | 0.526 |
| 55 | 0.455 |
| 66 | 0.400 |

— 610

- LD Power change :
  LD Power = $0.0002 \times \text{Width}^2 - 0.025 \times \text{Width} + 1.2179$

# FIG. 6B

## FIG. 6C

# FIG. 7

710

# FIG. 8

ACTIVATE PLURALITY OF LIGHT SOURCES

Pixel Timing

ADJUSTMENT PERIOD (810)

DISTANCE MEASUREMENT PERIOD (811)

Pixel Timing

LD Pulse

Detector Signal

LD Power And Amp Gain

ACTIVATE ONE LIGHT SOURCE

805

EP 4 206 727 A1

# FIG. 9

START

IRRADIATE LASER LIGHT TOWARD OBJECT — 901

OUTPUT LASER REFLECTION LIGHT SIGNAL BY DETECTING LASER LIGHT REFLECTED FROM OBJECT — 902

MEASURE PULSE WIDTH CORRESPONDING TO PERIOD IN WHICH LASER REFLECTION LIGHT SIGNAL IS SATURATED FROM LASER REFLECTION LIGHT SIGNAL — 903

CHANGE AT LEAST ONE OF LASER LIGHT INTENSITY TO BE IRRADIATED BY LASER LIGHT IRRADIATOR OR GAIN OF AMPLIFIER ACCORDING TO ANALYZED PULSE WIDTH — 904

CONTROL LASER LIGHT IRRADIATOR TO IRRADIATE ADJUSTED LASER LIGHT CORRESPONDING TO CHANGE OF AT LEAST ONE OF LASER LIGHT INTENSITY OR GAIN — 905

END

Europäisches
Patentamt

European
Patent Office

Office européen
des brevets

# EUROPEAN SEARCH REPORT

**Application Number**

EP 22 18 3375

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/200832 A1 (KAWAI NOBUHARU [JP] ET AL) 15 September 2005 (2005-09-15) | 1-3,6,7, 9,10, 13-15 | INV. G01S7/484 G01S7/4861 |
| Y | * abstract; figures 1 - 3 * | 4,11 | G01S7/486 |
| A | * paragraphs [0020], [0025], [0027] * * paragraphs [0029], [0031] * ----- | 8 | G01S7/4912 |
| X | JP 2014 062767 A (OMRON AUTOMOTIVE ELECTRONICS) 10 April 2014 (2014-04-10) | 1,2,9, 10,15 | ADD. G01S7/4863 G01S17/89 |
| Y | * abstract; figure 1 * * paragraph [0024] - paragraph [0026] * * paragraphs [0039], [0048], [0049] * ----- | 5,12 | G01S17/93 |
| Y | US 2021/156998 A1 (KIM YOUNG KYUN [KR]) 27 May 2021 (2021-05-27) | 4,5,11, 12 | |
| A | * abstract * * paragraphs [0049], [0060], [0061] * * paragraphs [0065], [0066] * ----- | 2,3,10 | |
| A | US 11 199 405 B2 (SAMSUNG ELECTRONICS CO LTD [KR]) 14 December 2021 (2021-12-14) * abstract; figures 1, 4, 6, 7 * * column 3, line 28 - line 39 * * column 4, line 63 - column 5, line 6 * * column 5, line 63 - column 6, line 26 * * column 7, line 43 - line 67 * * column 8, line 50 - column 61 * * column 9, line 29 - line 36 * ----- | 1-15 | **TECHNICAL FIELDS SEARCHED (IPC)**<br><br>G01S |

The present search report has been drawn up for all claims

| Place of search | Date of completion of the search | Examiner |
|---|---|---|
| Munich | 6 December 2022 | Knoll, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 3375

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2022

| Patent document cited in search report | | Publication date | Patent family member(s) | | Publication date |
|---|---|---|---|---|---|
| US 2005200832 | A1 | 15-09-2005 | CN | 1667354 A | 14-09-2005 |
| | | | DE | 102005009812 A1 | 29-09-2005 |
| | | | JP | 2005257325 A | 22-09-2005 |
| | | | US | 2005200832 A1 | 15-09-2005 |
| JP 2014062767 | A | 10-04-2014 | JP | 5889152 B2 | 22-03-2016 |
| | | | JP | 2014062767 A | 10-04-2014 |
| US 2021156998 | A1 | 27-05-2021 | KR | 20210063012 A | 01-06-2021 |
| | | | US | 2021156998 A1 | 27-05-2021 |
| US 11199405 | B2 | 14-12-2021 | KR | 20190005377 A | 16-01-2019 |
| | | | US | 2019011256 A1 | 10-01-2019 |
| | | | US | 2020256675 A1 | 13-08-2020 |

EPO FORM P0459

For more details about this annex : see Official Journal of the European Patent Office, No. 12/82